## Europäisches Patentamt

## European Patent Office

## Office européen des brevets

(19)

(11) Veröffentlichungsnummer: **0 009 175**
**B1**

(12) **EUROPÄISCHE PATENTSCHRIFT**

(45) Veröffentlichungstag der Patentschrift: **16.06.82**

(21) Anmeldenummer: **79103292.3**

(22) Anmeldetag: **05.09.79**

(51) Int. Cl.³: **C 01 B 25/37, C 09 C 1/04, C 09 D 5/08 //C01G9/00**

(54) Verfahren zur Herstellung von Zinkphosphat als Korrosionsschutzpigment.

(30) Priorität: **20.09.78 DE 2840820**

(43) Veröffentlichungstag der Anmeldung:
**02.04.80 Patentblatt 80/7**

(45) Bekanntmachung des Hinweises auf die Patenterteilung:
**16.06.82 Patentblatt 82/24**

(84) Benannte Vertragsstaaten:
**AT BE CH DE FR GB NL**

(56) Entgegenhaltungen:
DE - A - 1 926 361
DE - A - 2 324 859
DE - A - 2 655 458
DE - B - 1 667 731
DE - B - 2 051 641
DE - B - 2 733 722
DE - C - 1 567 609

(73) Patentinhaber: **HOECHST AKTIENGESELLSCHAFT**
**Postfach 80 03 20**
**D-6230 Frankfurt/Main 80 (DE)**

(72) Erfinder: **Wasel-Nielen, Horst Dieter, Dr.**
**Giselherweg 1**
**D-5030 Hürth (DE)**
Erfinder: **Adrian, Renate**
**Grosse Ölbruchstrasse 29**
**D-5030 Hürth (DE)**
Erfinder: **Panter, Herbert**
**Brünnenstrasse 35**
**D-5030 Hürth (DE)**
Erfinder: **Heymer, Gero, Dr.**
**Fasanenaue 12**
**D-5042 Erftstadt (DE)**
Erfinder: **Maurer, Alexander, Dr.**
**Am Grünen Weg 7**
**D-5030 Hürth (DE)**
Erfinder: **von Schenck, Raban, Dr.**
**Alleestrasse 42**
**D-5030 Hürth (DE)**

Courier Press, Leamington Spa, England.

### Verfahren zur Herstellung von Zinkphosphat als Korrosionsschutzpigment

Auf der Suche nach Ersatzstoffen für blei- bzw. chromathaltige Korrosionsschutzpigmente, die aus toxikologischen Gründen zunehmend der Kritik ausgesetzt sind, gewinnen phosphorhaltige Pigmente immer mehr an Bedeutung. Als phosphorhaltige Korrosionsschutzpigmente sind vor allem schwerlösliche Salze der Sauerstoffsäuren des Phosphors wie Orthophosphorsäuren, Pyrophosphorsäure, höher kondensierte Phosphorsäure, phosphorige sowie hypophosphorige Säure, vorgeschlagen worden. Einige dieser Produkte haben ihre Tauglichkeit als Korrosionsschutzpigmente auch schon in der Praxis beweisen.

Da die Wirksamkeit eines guten Korrosionsschutzpigments neben anderen Faktoren vor allem von der Korngröße abhängt, wurden bisher durch Entwickeln neuer Mahltechniken und Mühlentypen große Anstrengungen unternommen, entscheidende Verbesserungen hinsichtlich der Pigmentfeinheit zu erzielen. Dabei wurden sowohl Mahlverfahren beschrieben, die im Anschluß an die Trocknung des Produktes erfolgen, als auch Naßmahlverfahren, die der Trocknung des Pigments vorausgehen. Diese Mahlverfahren erfüllen zwar ihren Zweck, haben allerdings den Nachteil, daß sie einen zusätzlichen und sehr energieintensiven Verfahrensschritt darstellen. Außerdem zeigen gemahlene Produkte üblicherweise eine breite Kornverteilung und enthalten außerdem oft ungünstig geformte Kristallbruchstücke. Beides kann sich nachteilig auswirken. Von guten Korrosionsschutzpigmenten muß aber wegen ihrer Anwendung in dünnen, schützenden Grundierungen erwartet werden, daß sie eine stets gleichbleibende Kornfeinheit besitzen, um die Belegdichte bei Einsatz möglichst kleiner Mengen an Pigmenten optimal zu gestalten. Dies bedeutet, daß am Ort des Korrosionsschutzes, d.h. der Metalloberfläche, ein möglichst große Pigmentoberfläche vorliegen muß, was nur bei genügend kleiner Teilchengröße gewährleistet ist. Unregelmäßige Verteilung der Pigmentteilchen, z.B. von Phosphaten, auf der Metalloberfläche beeinträchtigt dagegen die antikorrosive Wirkung erheblich und führt zu ungenügendem Korrosionsschutzt.

Unter den neueren Entwicklungen der Korrosionsschutzpigmente haben Phosphate und hier vor allem Zinkphosphat der Formel $Zn_3(PO_4)_2 \cdot x\ H_2O$ Bedeutung erlangt. Es irst hinreichend bekannt und Stand der Technik, Zinkphosphat aus Zinkoxid bzw. Zinksalzen und Phosphorsäure bzw. Phosphaten herzustellen. Dabei fallen aber üblicherweise grobe Kristalle an, die anschließend vermahlen werden müssen, was zwangsläufig die oben genannten Nachteile mit sich bringt. Aus der GB—A—962 182 ist bekannt, z.B. Zinkphosphat-Tetrahydrat in einem Zweistufenprozeß herzustellen. Hierbei arbeitet man zunächst bei etwa 20°C und erhöht die Temperatur des Reaktionsgemisches nach erfolgter Reaktion auf über 60°C, wobei man die Lösung zur Kristallisation animpfen muß. Weiterhin gewinnt man dort das Zinkphosphat-Tetrahydrat erst durch Dehydratisieren und anschließendes Rehydratisieren. Diese an sich schon sehr aufwendige Verfahrensweise führt dennoch nicht zu einem feinteiligen, dispergierbaren Pigment, sondern auch dort ist eine anschließende Mahlung unbedingt erforderlich.

In der DE—A—2 655 458 wird ein Verfahren zur Herstellung von Phosphatpigmenten beschrieben, das aber, bedingt durch die Umsetzung von Zinkionen mit einem Eisenmaterial, nur in der Lage ist, ein aus Zink- und Eisenphosphat bestehendes Phosphatpigment zu liefern. Außerden ist der Einsatz eines weiteren Stoffs, nämlich eines Erdalkalihydroxids, notwendig, um das Pigment in einen dispergierfähigen Zustand zu bringen, was einen zusätzlichen Verfahrensschritt darstellt.

Es wurde nun ein Verfahren gefunden, das die Nachteile einer Mahlung und des Einsatzes zusätzlicher Stoffe bei der Herstellung von Zinkphosphat als phosphorhaltigem Korrosionsschutzpigment vermeidet. Dieses Verfahren gestattet es, gleich bei der Fällung ein Zinkphosphat zu erzeugen, das nicht nur fein genug ist, um als Korrosionsschutzpigment Verwendung zu finden, sondern auch eine gleichbleibend enge Kornverteilung von mindestens 90% zwischen 0,1 und 8 $\mu$m aufweist. Ein solches Produkt bringt wegen der besseren Dispergierbarkeit und damit besseren Wirksamkeit als Korrosionsschutzpigment weitere Vorteile mit sich.

Überraschenderweise wurde gefunden, daß man dieses dispergierfähige und mit besonders engem Kornband ausgezeichnete Zinkphosphat gerade dann erhält, wenn man das Zinkoxid mit Wasser bzw. der Mutterlauge zu einer konzentrierten Aufschlämmung anrührt, diese Aufschlämmung in einem Rühr behälter durch gutes Rühren in ihrer Konzentration konstant hält und sie anschließend in einem schnell drehenden Dispergierorgan (3000—10 000 UpM), wie z.B. einer Gewindepumpe, mit einer konzentrierten Phosphorsäure zur Reaktion bringt. Durch den Aufbau des Dispergierorgans und die Verfahrensweise ist dabei sichergestellt, daß innerhalb kürzester Zeit, wie z.B. des Durchgangs durch die Gewindepumpe, eine innige Durchmischung der Reaktionspartner stattfindet und gleichzeitig die Reaktion abläuft.

Bei der Reaktion zwischen Zinkoxid und Phosphorsäure wurde überraschenderweise gefunden, daß trotz extrem kurzer Verweilzeit in der Reaktionszone die Reaktionskomponenten vollständig abreagieren und es zu keiner schädlichen Kristallvergrößerung im weiteren Verlauf des Verfahrens kommt. Dies gelingt insbesondere dann, wenn darauf geachtet wird, daß kein Überschuß an Phosphorsäure am Reaktionsort vorliegt, da sich dieser ungünstig auf die Produktqualität auswirkt. Zur Vermeidung eines solchen schädlichen Überschusses an Phosphorsäure kann man schon beim Ansetzen der Zinkoxidaufschlämmung ein Zinkoxid: Phosphorsäure-Molverhältnis, das größer als 1,5 ist, einstellen. Andernfalls ist darauf zu achten, daß die Phosphorsäure sehr genau in die Reaktionszone, d.h. in das Dispergierorgan, dosiert wird, z.B. mit Hilfe einer Düse. Nur so wird eine vollständige und vor allem rasche Reaktion im vorgegebenen Dispergierorgan gewährleistet und ein Zinkphosphat mit besonders enger Kornverteilung und guter Dispergierbarkeit erhalten.

Ein weiterer Vorteil des erfindungsgemäßen Verfahrens besteht darin, daß durch das Arbeiten in einer konzentrierten Aufschlämmung nur wenig Mutterlauge anfällt, was sich vor allem auf die Dauer der Filtration des Zinkphosphats und die Dimensionierung der Reaktionsbehälter günstig auswirkt.

Bei dem erfindungsgemäßen Verfahren wird üblicherweise bei Temperaturen zwischen 10°C und 100°C gearbeitet, wobei höhere Temperaturen innerhalb dieses Bereiches günstiger sind. Auch ein kurzzeitiges Über- bzw. Unterschreiten dieses Bereichs bringt keine gravierenden Nachteile. Die Konzentration der eingesetzten Phosphorsäure bewegt sich zwischen 20 und 85 Gewichts %, diejenige der Zinkoxid-Aufschlämmung liegt zwischen 10 und 50 Gewichts %. Dabei ist darauf zu achten, daß das resultierende Gemisch nicht zu viskos wird, so daß es ohne weiteres das Dispergierorgan passieren kann, andererseits aber auch nicht so dünnflüssig wird, daß sich die Verdünnungseffekte nachteilig auf die Produktgüte auswirken können.

Das so hergestellte Zinkphosphat zeichnet sich vor allem durch seine Pigmentfeinheit und sein enges Kornspektrum aus, was bei der Verwendung als Korrosionsschutzmittel von Großem Vorteil ist. Dabei ist eine Kornfeinheit von höchstens 20 $\mu$m gewährleistet, da schon geringe Anteile, die diese Korngröße überschreiten, sehr negative Auswirkungen auf Korrosionsschutzgrundierungen haben, denn einige Beschichtungen werden in Stärken von nur ca. 25 $\mu$m aufgetragen. Ein weiterer Vorteil des erfindungsgemäß hergestellten Zinkphosphates ist seine gute Dispergierbarkeit mittels Dissolvern, was dieser Kornfeinheit und dem engen Kornspektrum zu verdanken ist. Die Dispergierung mittels Dissolver stellt nämlich eine sehr moderne, schnelle und wirtschaftliche Methode zur Herstellung von Grundierungen dar.

Das Produkt wird nach seiner Fällung auf herkömmliche Weise von der Mutterlauge durch Filtration oder Zentrifugieren abgetrennt, wobei als weiterer Vorteil des erfindungsgemäßen Verfahrens die Mutterlauge ohne weitere Reinigung oder Aufbereitung in die Reaktion rückgeführt werden kann. Anschließend wird das Korrosionsschutzpigment in an sich bekannten Aggregaten getrocknet; die Trocknungstemperatur bestimmt dabei den Kristallwassergehalt.

Bei dem erfindungsgemäßen Verfahren arbeitet man üblicherweise diskontinuierlich, wobei man das Reaktionsgemisch durch den intensiven Umpump des Dispergierorgans ständig im Kreise führt, bis die Reaktion beendet ist. Es ist aber auch möglich, das Verfahren kontinuierlich durchzuführen, da sowohl das Reaktionsaggregat als auch die Verfahrensweise diese Möglichkeit durchaus zulassen.

Das Zink als metallische Reaktionskomponente kann in Form des Oxids, Hydroxids oder eines Salzes, z.B. des Chlorids oder Acetats, eingesetzt werden. Die phosphorhaltige Reaktionskomponente kann Orthophosphorsäure, Pyrophosphorsäure, eine höher kondensierte Phosphorsäure, Phosphorige Säure, Hypophosphorige Säure oder ein Alkali- oder Ammoniumsalz dieser Sauerstoffsäuren des Phosphors sein. Diese Alkali- oder Ammoniumsalze können auch in situ durch Zuführung von Alkalilauge bzw. Ammoniak und einer Sauerstoffsäure des Phosphors bereitet werden.

Im einzelnen betrifft die Erfindung nunmehr ein Verfahren zur Herstellung von Zinkphosphat der Formel $Zn_3(PO_4)_2 \cdot xH_2O (x=0—4)$ als Korrosionsschutzpigment mit einer Korngrösse von höchstens 20 $\mu$m durch Umsetzung einer Zinkverbindung mit Phosphorsäure bei Temperaturen von 10°C—100°C, welches dadurch gekennzeichnet ist, daß man zur Erzielung einer Korngrößenverteilung des Pigments von mindestens 90% zwischen 0,05 und 8 $\mu$m eine 10 bis 50 gewichtsprozentige, vorzugsweise 20 bis 40 gewichtsprozentige, wäßrige Aufschlämmung von Zinkoxid mit 20 bis 85 gewichtsprozentiger, vorzugsweise 75 bis 85 gewichtsprozentiger, Orthophosphorsäure in einem mit 3000 bis 10 000 Upm rotierenden Dispergierorgan durch inniges Vermischen zur Reaktion bringt, wobei man zur Vermeidung saurer pH-Werte in der Reaktionsmischung ein Molverhältnis von Zinkoxid:Orthophosphorsäure von mindestens 1,5 einstellt, und das ausgefallene Pigment in bekannter Weise abtrennt und trocknet.

Darüber hinaus kann das Verfahren der Erfindung bevorzugt und wahlweise dadurch gekennzeichnet sein, daß man

a) bei einer kontinuierlichen Arbeitsweise beide Reaktionskomponenten gleichzeitig in das Dispergierorgan eindosiert;

b) bei einer diskontinuierlichen Arbeitsweise eine der beiden Reaktionskomponenten im Kreislauf durch das Dispergierorgan leitet, dem man eine wäßrige Lösung der anderen Reaktionskomponente zudosiert;

c) die Aufschlämmung von Zinkoxid im Kreislauf durch das Dispergierorgan pumpt, dem man die Orthosphosphorsäure zudosiert;

d) die Reaktionsmischung 0,5 bis 5, vorzugsweise 1—2, Stunden im Kreislauf durch das Dispergierorgan pumpt;

e) die nach dem Abtrennen des ausgefallenen Pigments zurückbleibende Mutterlauge zum Lösen oder Suspendieren der Reaktionskomponenten verwendet;

f) als Dispergierorgan eine Gewindepumpe oder einen Emulsor verwendet.

**Beispiel 1**

Unter gutem Rühren wird eine Aufschlämmung aus 100 kg ZnO und 300 l Wasser bereitet und zur intensiven Suspendierung eine Stunde über die mit 6000 Upm drehende Gewindepumpe im Kreis geführt. Danach werden 94,4 kg 85 gewichtsprozentige Orthophosphorsäure über einen Zeitraum von 2 Stunden in der Gewindepumpe der Zinkoxid-Aufschlämmung zudosiert und dort augenblicklich zur Reaktion gebracht. Das Molverhältnis ZnO:$H_3PO_4$ ist stöchiometrisch und beträgt 1,5. Die Temperatur steigt dabei von 20°C auf 80°C an. Nach Beendigung der Zugabe von Phosphorsäure wird die Zinkphosphat-Aufschlämmung noch etwa 30 Minuten im Kreis gepumpt und dann in einem Behälter zwischengelagert. Das Zinkphosphat wird nun von der Mutterlauge abzentrifugiert und die Mutterlauge in den Behälter für die Aufschlämmung des ZnO rückgeführt. Der Feststoff wird auf herkömmliche Weise bei 85°C in einem Flugshichttrockner getrocknet. Man erhält ein Zinkphosphat A mit folgender Korngrößenverteilung (gemessen mit einem Fliehkraftsichter): 0,05—8 $\mu$m=94,9%; 8—12 $\mu$m=4%; 12—15 $\mu$m=1%.

**Beispiel 2**

Unter gutem Rühren und Umpumpen über eine mit 6000 Upm rotierende Gewindepumpe werden 183 kg ZnO in 600 l Wasser suspendiert und eine gleichmäßig konzentrierte Aufschlämmung hergestellt. Danach werden 150 kg 85 gewichtsprozentige Phosphorsäure über die Gewindepumpe während 2 Stunden zudosiert und augenblicklich zur Reaktion gebracht. Das Molverhältnis ZnO:$H_3PO_4$ ist überstöchiometrisch und beträgt 1,73. Die Temperatur steigt dabei auf 70°C an. Nach der Reaktion wird die Zinkphosphat-Aufschlämmung, wie in Beispiel 1 beschrieben, aufgearbeitet und die Mutterlauge in den Behälter für die Aufschlämmung des ZnO rückgeführt. Es resultiert ein Zinkphosphat-Pigment B folgender Korngrößenverteilung: 0,05—8 $\mu$m=94,9%; 8—12 $\mu$m=4%; 12—15 $\mu$m=1%.

**Beispiel 3**

Unter gutem Rühren werden 160 kg ZnO in 500 l Wasser suspendiert und zur Einstellung einer gleichmäßigen Konzentration der Aufschlämmung 1 Stunde über eine mit 6000 Upm rotierende Gewindepumpe im Kreis gepumpt. Sodann werden 150 kg 85 gewichtsprozentige Phosphorsäure über eine Düse in der Gewindepumpe der Aufschlämmung zudosiert. Dies dauert etwa 2 Stunden, wobei die Temperatur auf etwa 80°C ansteigt. Das Molverhältnis ZnO:$H_3PO_4$ ist stöchiometrisch und beträgt 1,5. Danach wird wie in Beispiel 1 aufgearbeitet. Es resultiert ein Zinkphosphatpigment C folgender Korngrößenverteilung: 0,05—8 $\mu$m=94,8%, 8—12 $\mu$m=4%; 12—15 $\mu$m=1%.

**Beispiel 4 (Vergleichsbeispiel)**

Unter gutem Rühren wird eine Aufschlämmung aus 100 kg ZnO und 300 l Wasser bereitet und eine Stunde gerührt. Danach werden unter gutem Rühren 94 kg 85 gewichtsprozentige Phosphorsäure über einen Zeitraum von 2 Stunden zugegeben und zur Reaktion gebracht, wobei die Temperatur auf etwa 70°C ansteigt. Das Molverhältnis ZnO:$H_3PO_4$ ist stöchiometrisch und beträgt 1,5. Nach Beendigung der Reaktion wird noch etwa 30 min gerührt, anschließend von der Mutterlauge abzentrifugiert, und der Feststoff wie in Beispiel 1 bei 85°C getrocknet. Es resultiert ein Zinkphosphat D mit folgender Korngrößenverteilung: 0,05—8 $\mu$m=69,9%; 8—12 $\mu$m=15%; 12—15 $\mu$m=5%: >15 $\mu$m=10%.

Nachträgliches Mahlen des Produktes auf einer Luftstrahlmühle bzw. einer Pralltellermühle führt zu Zinkphosphaten E bzw. F folgender Korngrößenverteilung:

E: 0,05—8 $\mu$m=79,8%; 8—12 $\mu$m=15%; 12—15 $\mu$m=5%

F: 0,05—8 $\mu$m=74,9%, 8—12 $\mu$m=17%, 12—15 $\mu$m=8%

**Beispiel 5**

2,95 kg Zinkoxid werden unter Rühren in 25 l Wasser suspendiert und mit Hilfe einer Pumpe 15 min durch einen Emulsor, der mit 3000 Ump rotiert, gepumpt. Dann werden 2,7 kg 85 gewichtsprozentige Phosphorsäure während 20 min im Emulsor der Suspension zudosiert. Das Molverhältnis ZnO:$H_3PO_4$ beträgt 1,55. Die Temperatur beträgt dabei 40°C. Anschließend wird das Reaktionsgemisch noch 20 min durch den Emulsor gepumpt, danach über eine Nutsche filtriert und mit Wasser gewaschen. Während die Mutterlauge rückgeführt wird, wird das Zinkphosphat bei 70°C getrocknet. Man erhält ein Produkt folgender Korngrößenverteilung (G):

0,05—8 $\mu$m=90,9%; 8—12 $\mu$m=6,5%; 12—15 $\mu$m=2,5%.

**Beispiel 6**

Unter gutem Rühren werden 100 kg ZnO in 300 l der Mutterlauge aus Beispiel 1 zu einer gleichmäßig konzentrierten Aufschlämmung zubereitet und über die mit 6000 Upm rotierende Gewindepumpe im Kreis geführt. Danach werden 94,4 kg 85 gewichtsprozentige Phosphorsäure über einen Zeitraum von 2 Stunden in der Gewindepumpe zudosiert und dort augenblicklich zur Reaktion gebracht.

Das Molverhältnis ZnO:H₃PO₄ ist 1,5. Die Temperatur steigt dabei von 20°C auf 70°C an. Nach Beendigung der Zugabe von Phosphorsäure wird die resultierende Zinkphosphat-Aufschlämmung noch etwa 30 min im Kreis gepumpt und dann, wie in Beispiel 1 beschrieben, aufgearbeitet. Man erhält ein Zinkphosphat H mit folgender Korngrößenverteilung: 0,05—8 μm=94,8%: 8—12 μm=4%; 12—15 μm=1%.

Beispiel 7
Prüfung der Dispergierbarkeit der vorgenannten Korrosionsschutzpigmente:

1. Prüfrezeptur:

| | |
|---|---|
| 30,0 Gew.% | Alkydharz (Alftalat[R] AF 640; (R)=eingetragenes Warenzeichen der Firma Hoechst Aktiengesellschaft, Frankfurt (M)) |
| 27,0 Gew.% | Korrosionsschutzpigment (Zn₃(PO₄)₂ . 4H₂O) |
| 18,0 Gew.% | Titandioxid |
| 3,0 Gew.% | modifizierter Montmorillonit als Geliermittel (Bentone[R], 10 gewichtsprozentig; (R)=eingetragenes Warenzeichen der Firma NL Industries Inc., New York, USA) |
| 1,0 Gew.% | Butanol |
| 0,2 Gew.% | Methylisobutylketon |
| 4,0 Gew.% | aromatische Kohlenwasserstoffe vom Siedebereich 187—213°C (Shellsol[R] AB; (R)=eingetragenes Warenzeichen der Firma Deutsche Shell AG, Hamburg) |
| 1,7 Gew.% | Kobalthaltiges Siccativ (Soligen[R]; (R)=eingetragendes Warenzeichen der Firma Gebrüder Borchers AG, Goslar) |
| 15,1 Gew.% | Testbenzin (Kohlenwasserstoffe vom Siedebereich 145—200°C, Sangajol[R], (R)=eingetragenes Warenzeichen der Firma Deutsche Shell AG, Hamburg) |
| 100,0 Gew.% | |

2. Beschreibung der Dispergierprüfung:
Die verschiedenen Komponenten der Prüfrezeptur werden in ein 1 l-Gefäß gegeben, bei niederer Drehzahl (unterhalb 1000 Upm) des Dissolvers gemischt und anschließend 15 min dispergiert. Dabei wird eine Rührgeschwindigkeit von 8400 Upm eingestellt. Der Durchmesser des Gefäßes beträgt 100 mm, jener der Rührscheibe 50 mm. Nach dem Dispergieren wird der Lack über eine schrägstehende Glasplatte oder Kunststoffolie gegossen und nach dem Abtropfen bei 60°C getrocknet.
Die Benotung erfolgt in Anlehnung an DIN 53 209, wobei die Stippenbildung bewertet wird. Die Anzahl der Stippen wird zunehmend von m 0 bis m 5, die Größe von g 0 bis g 5 charakterisiert. m 1/g 1 bedeutet demnach ein sehr gutes Ergebnis, während m 5/g 5 völlig ungenügend wäre.

3. Ergebnis der Dispergierprüfung:

| Pigment | Prüfnote |
|---|---|
| A | m 1/g 2 |
| B | m 1/g 1 |
| C | m 1/g 1 |
| D | m 5/g 5 |
| E | m 1/g 2 |
| F | m 2/g 2 |
| G | m 2/g 1 |
| H | m 1/g 2 |

Patentansprüche

1. Verfahren zur Herstellung von Zinkphosphat der Formel Zn₃(PO₄)₂ · xH₂O(x=0—4) als Korrosionsschutzpigment mit einer Korngröße von höchstens 20 μm durch Umsetzung einer Zinkverbindung mit Phosphorsäure bei Temperaturen von 10°C—100°C, dadurch gekennzeichnet, daß man zur Erzielung einer Korngrößenverteilung des Pigments von mindestens 90% zwischen 0,05 und 8 μm eine 10 bis 50 gewichtsprozentige wäßrige Aufschlämmung von Zinkoxid mit 20 bis 85 gewichtsprozentiger Orthophosphorsäure in einem mit 3000 bis 10 000 UpM rotierenden Dispergierorgan durch inniges Vermischen zur Reaktion bringt, wobei man zur Vermeidung saurer pH-Werte in der Reaktionsmischung ein Molverhältnis von Zinkoxid:Orthophosphorsäure von mindestens 1,5 einstellt, und das ausgefallene Pigment in bekannter Weise abtrennt und trocknet.

2. Verfahren nach Anspruch 1, dadurch gekennzeichnet, daß man bei einer kontinuierlichen Arbeitsweise beide Reaktionskomponenten gleichzeitig in das Dispergierorgan eindosiert.

3. Verfahren nach Anspruch 1, dadurch gekennzeichnet, daß man bei einer diskontinuierlichen Arbeitsweise eine der beiden Reaktionskomponenten im Kreislauf durch das Dispergierorgan leitet, dem man eine wäßrige Lösung der anderen Reaktionskomponente zudosiert.

4. Verfahren nach Anspruch 3, dadurch gekennzeichnet, daß man die Aufschlämmung von Zinkoxid im Kreislauf durch das Dispergierorgan pumpt, dem man die Orthophophorsäure zudosiert.

5. Verfahren nach einem der vorhergehenden Ansprüche, dadurch gekennzeichnet, daß man die Reaktionsmischung 0,5 bis 5, vorzugsweise 1—2, Stunden im Kreislauf durch das Dispergierorgan pumpt.

6. Verfahren nach einem der vorhergehenden Ansprüche, dadurch gekennzeichnet, daß man die nach dem Abtrennen des ausgefallenen Pigments zurückbleibende Mutterlauge zum Lösen oder Suspendieren der Reaktionskomponenten verwendet.

7. Verfahren nach einem der verhergehenden Ansprüche, dadurch gekennzeichnet, daß man als Dispergierorgan eine Gewindepumpe oder einen Emulsor verwendet.

## Claims

1. Process for making zinc phosphate of the formula $Zn_3(PO_4)_2 . xH_2O$ (x=0—4) as anticorrosive pigment having a particle size of at most 20 microns by reacting a zinc compound with phosphoric acid at temperatures of 10°C—100°C, characterized in that, in order to obtain a pigment consisting to an extent of at least 90% of particles with a size between 0.05 and 8 microns, a 10 to 50 weight % aqueous suspension of zinc oxide is intimately mixed, and thereby reacted, with orthophosphoric acid of 20 to 85 weight % strength, inside a dispersing means rotating at a speed of 3000 to 10 000 rpm, the zinc oxide and orthophosphoric acid being used in a molar ratio of at least 1.5 so as to avoid acid pH-values in the reaction mixture, and the precipitated pigment is separated and dried in known manner.

2. Process as claimed in claim 1, characterized in that the two reactants are introduced jointly into the dispersing means, in the event of the process being effected continuously.

3. Process as claimed in claim 1, characterized in that one of the two reactants is circulated through the dispersing means and admixed therein with an aqueous solution of the other reactant, in the event of the process being effected discontinuously.

4. Process as claimed in claim 3, characterized in that the zinc oxide suspension is circulated by pumping it through the dispersing means and admixed therein with metered proportions of orthophosphoric acid.

5. Process as claimed in any of the preceding claims, characterized in that the reaction mixture is circulated by pumping it through the dispersing means over a period of 0.5 to 5 hours, preferably 1 to 2 hours.

6. Process as claimed in any of the preceding claims, characterized in that mother liquor, which is retained after separation of the precipitated pigment, is used for dissolving or suspending the reactants therein.

7. Process as claimed in any of the preceding claims, characterized in that the dispersing means is a screw pump or emulsor.

## Revendications

1. Procédé de préparation de phosphate de zinc de formule $Zn_3(PO_4)_2$, $xH_2O$ (x=0 à 4) comme pigment anticorrosif d'une dimension granulométrique de 20 microns au maximum par réaction d'un composé de zinc avec de l'acide phosphorique à des températures de 10 à 100°C, caractérisé en ce que, pour obtenir un pigment dont au moins 90% des particules présentent une répartition granulométrique comprise entre 0,05 et 8 microns, l'on fait réagir, par mélange intime dans un organe dispersant tournant à une vitesse de 3000 à 10 000 tr/min, une solution aqueuse à 10—50% en poids, d'oxyde de zinc avec un acide orthophosphorique à 20—85% en poids, l'oxyde de zinc et l'acide orthophosphorique étant utilisés dans un rapport molaire d'au moins 1,5 pour éviter l'établissement de valeurs pH acides dans le mélange réactionnel, et on sépare et on sèche de manière habituelle le pigment précipité.

2. Procédé selon la revendication 1, caractérisé en ce que, pour l'opération en continu, on introduit simultanément les deux réactifs dans l'organe dispersant.

3. Procédé selon la revendication 1, caractérisé en ce que, pour l'opération en discontinu, on fait

6

circuler l'un des deux réactifs par l'organe dispersant, dans lequel on introduit des quantités dosées d'une solution aqueuse de l'autre réactif.

4. Procédé selon la revendication 3, caractérisé en ce que l'on fait circuler la suspension d'oxyde de zinc par l'organe dispersant, dans lequel on introduit des quantités dosées d'acide orthophosphorique.

5. Procédé selon l'une des revendications précédentes, caractérisé en ce que l'on fait circuler par l'organe dispersant le mélange réactionnel par pompage pendant 0,5 à 5 heures, de préférence 1 à 2 heures.

6. Procédé selon l'une des revendications précédentes, caractérisé en ce que l'on utilise la liqueur mère restant après séparation du pigment précipité pour dissoudre les réactifs ou les mettre en suspension.

7. Procédé selon l'une des revendications précédentes, caractérisé en ce que l'on utilise, comme organe dispersant, une pompe à vis sans fin ou un émulsionneur.